# EUROPEAN PATENT APPLICATION

(11) **EP 1 548 724 A1**
(43) Date of publication of application: **29.06.2005**
(21) Application number: 04106595.4
(22) Date of filing: 15.12.2004
(51) Int. Cl.: G11B 7/24, G11B 7/26

(54) **Pressure sensitive adhesive sheet, a multilayer structured article for photorecording media having the sheet and multilayer photorecording medium having the article**

(30) Priority: 25.12.2003 JP 2003430390; 09.03.2004 JP 2004065586
(71) Applicant: LINTEC Corporation, Tokyo 173-0001 (JP)
(72) Inventor: Nakabayashi, Masahito, 336-0031, Saitama-shi (JP); Miyata, Sou, 270-2212, Chiba (JP)
(74) Representative: Gille Hrabal Struck Neidlein Prop Roos

(57) **Abstract**

A pressure sensitive adhesive sheet which is a laminate of a photorecording layer containing a photosensitive material and a pressure sensitive adhesive layer which is a pressure sensitive adhesive layer or a pressure sensitive adhesive layer of the energy hardening type, a multilayer structured article for photorecording medium using this sheet in which the photorecording layer and the pressure sensitive adhesive layer are laminated alternately, and a multilayer photorecording medium having this article, are provided. The sheet, the article and the medium exhibit excellent accuracy of thickness and can be produced easily without restriction on the material. The sheet, the article and the medium having a great area can be produced. When the pressure sensitive adhesive layer is formed with a pressure sensitive adhesive layer of the energy hardening type, formation of press marks on the multilayer photorecording medium can be suppressed.

## Description

### BACKGROUND OF THE INVENTION

### 1. Field of the Invention

The present invention relates to a pressure sensitive adhesive sheet, a multilayer structured article for photorecording media having the sheet and a multilayer photorecording medium having the article. More particularly, the present invention relates to a pressure sensitive adhesive sheet comprising a photorecording layer with which a multilayer photorecording medium exhibiting excellent accuracy of thickness of individual layers and the entire laminate can be produced easily without restriction on the material and a multilayer photorecording medium having a great area can be produced, a multilayer structured article for photorecording media formed by using the pressure sensitive adhesive sheet and a multilayer photorecording medium comprising the multilayer structured article and exhibiting excellent accuracy of thickness of individual layers and the entire laminate. The present invention also relates to a multilayer photorecording media exhibiting the above characteristics and suppressing formation of press marks.

### 2. Description of Related Art

Recently, photorecording media have been attracting attention since a great amount of data can be recorded and are used in various applications. To further increase the density of recording, a method of three dimensionally recording data (referred to as a multilayer photorecording method, hereinafter) is proposed. For example, a technology in which the multilayer photorecording method is conducted using a photopolymer material containing a photopolymerizable photoreactive component is reported by Y. Kawata et al (for example, Appl. Opt., 35(1996) 2466).

However, the multilayer photorecording media for the multilayer photorecording method described above heretofore has a problem in that cross-talk of data between the layers takes place during the multilayer recording and the playback. It may be considered that an increase in the distance between the photorecording layers is effective for overcoming the problem of the cross-talk. However, problems arise in this case in that a decrease in the density of recording is inevitable and, moreover, the number of the photorecording layer is inevitably restricted since a portion of the light necessary for reading and writing recorded data is absorbed before reaching the desired layer.

To decrease the cross-talk, for example, a photorecording medium having two or more recording layers in which non-recording layers composed of a material into which the information carried by light is not written by the light are disposed at some or all of the portions between the recording layers (for example, Japanese Patent Application Laid-Open No. Heisei 11(1999)-250496), and a macromolecular laminate in which macromolecular layers having the ability of photorecording and macromolecular spacer layers are alternately laminated (for example, Japanese Patent Application Laid-Open No. 2000-67464), are proposed.

The above media having the laminate structure are, in general, produced by forming and laminating the layers in accordance with the spin coating process. However, in the spin coating process, it is necessary that the formed layers are not adversely affected by the solvent, and a great restriction arises in the selection of the photosensitive material, the matrix material and the material used for the non-recording layers disposed between the layers.

The production of photorecording media in accordance with the spin coating process has further problems in that producing a media having a great area is difficult, the productivity is small, and the accuracy of the thickness of individual layers and the entire laminate is poor.

To overcome the above problems, the present inventors developed a technology for obtaining a multilayer photorecording medium using a pressure sensitive adhesive sheet obtained by laminating a photorecording layer containing a photosensitive material and a pressure sensitive adhesive layer (Japanese Patent Application No. 2003-430390).

### SUMMARY OF THE INVENTION

Under the above circumstances, the present invention has a first object of providing a pressure sensitive adhesive sheet having a photorecording layer with which a multilayer photorecording medium exhibiting excellent accuracy of thickness of individual layers and the entire laminate can be produced easily without restriction on the material and a multilayer photorecording medium having a great area can be produced, a multilayer structured article for photorecording media formed by using the pressure sensitive adhesive sheet and a multilayer photorecording medium comprising the multilayer structured article and exhibiting excellent accuracy of thickness of individual layers and the entire laminate. The present invention has a second object of providing a multilayer photorecording media exhibiting the above characteristics and suppressing formation of press marks due to deformation of the pressure sensitive adhesive under a pressure even when a great pressure is applied to a portion of the media, for example, when the photorecording medium is fastened by a clip.

As the result of intensive studies by the present inventors to achieve the above objects, it was found that the first object could be achieved by a pressure sensitive adhesive sheet obtained by laminating a photorecording layer and a pressure sensitive adhesive layer, and the second object could be achieved by using a pressure sensitive adhesive layer of the energy hardening type as the afore-said pressure sensitive adhesive layer. The present invention has been completed based on this knowledge.

The present invention provides:
(1) A pressure sensitive adhesive sheet comprising a laminate of a photorecording layer which comprises a photosensitive material and a pressure sensitive adhesive layer;
(2) A pressure sensitive adhesive sheet according to (1), which comprises a release film at each outer face of the photorecording layer and the pressure sensitive adhesive layer;
(3) A pressure sensitive adhesive sheet according to any one of (1) and (2), wherein the pressure sensitive adhesive layer comprises an acrylic pressure sensitive adhesive;
(4) A multilayer structured article for photorecording media which is formed by using a pressure sensitive adhesive sheet described in any one of (1), (2) and (3), wherein the photorecording layer and the pressure sensitive adhesive layer are laminated alternately;
(5) A pressure sensitive adhesive sheet for photorecording media according to (1), wherein the pressure sensitive adhesive layer comprises a pressure sensitive adhesive layer of an energy hardening type;
(6) A pressure sensitive adhesive sheet for photorecording media according to (5), which comprises a release film at each outer face of the photorecording layer and the pressure sensitive adhesive layer;
(7) A pressure sensitive adhesive sheet for photorecording media according to any one of (5) and (6), wherein the pressure sensitive adhesive layer of an energy hardening type is a pressure sensitive adhesive layer of a heat hardening type or an energy beam hardening type;
(8) A multilayer structured article for photorecording media which is formed with a pressure sensitive adhesive sheet described in any one of (5), (6) and (7), wherein the photorecording layer and the pressure sensitive adhesive layer hardened by application of an energy are laminated alternately; and
(9) A multilayer photorecording medium which comprises a multilayer structured article described in any one of (4) and (8).

### BRIEF DESCRIPTION OF THE DRAWINGS

Figure 1 shows a sectional view exhibiting an embodiment of the construction of the pressure sensitive adhesive sheet of the present invention.
Figure 2 shows a sectional view exhibiting an embodiment of the construction of the multilayer structured article for photorecording media of the present invention.
Figure 3 shows a sectional view exhibiting another embodiment of the construction of the multilayer structured article for photorecording media of the present invention.

The numbers and characters in the figures have the meanings as listed in the following:
- 1, 1-1, 1-2, 1-3, 1-n:: Photorecording layers
- 2, 2-1, 2-2, 2-3, 2-n, 6:: Pressure sensitive adhesive layers
- 3:: Release film I
- 4:: Release film II
- 5:: A substrate
- 10:: A pressure sensitive adhesive sheet
- 20, 30:: Multilayer structured article for photorecording media

| | |
|---|---|
| | |
| | |
| | |
| | |
| | |
| | |
| | |

### DESCRIPTION OF THE PREFERRED EMBODIMENTS

The pressure sensitive adhesive sheet of the present invention is a pressure sensitive adhesive sheet comprising a laminate of a photorecording layer comprising a photosensitive material and a pressure sensitive adhesive layer, which is characterized in that the pressure sensitive adhesive layer comprises a pressure sensitive adhesive layer or a pressure sensitive adhesive layer of the energy hardening type, and is advantageously used as the material for preparing a multilayer structured article for photorecording media which will be described below.

The construction of the pressure sensitive adhesive sheet is not particularly limited as long as the sheet has the construction in which a photorecording layer and the pressure sensitive adhesive layer described above are laminated. When the sheet is used as the material for a multilayer structured article for photorecording media, it is preferable that a single photorecording layer and a single pressure sensitive adhesive layer are laminated, and a release film is laminated to each outer face of the photorecording layer and the pressure sensitive adhesive layer from the standpoint of the accuracy of the thickness of the photorecording layer and the pressure sensitive adhesive layer and easiness of handling. The pressure sensitive adhesive layer may be a pressure sensitive adhesive layer or a pressure sensitive adhesive layer of the energy hardening type. When the pressure sensitive adhesive layer is a pressure sensitive adhesive layer of the energy hardening type, a multilayer structured article which suppresses formation of press marks can be obtained.

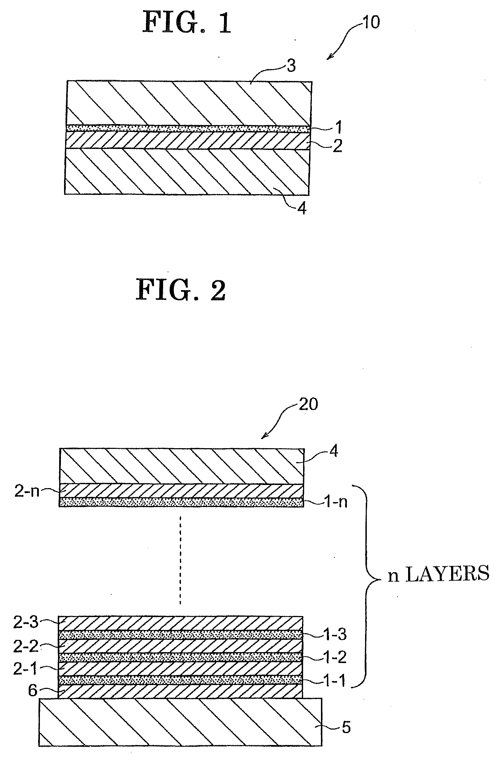

Figure 1 shows a sectional view exhibiting an embodiment of the construction of the pressure sensitive adhesive sheet of the present invention. In a pressure sensitive adhesive sheet 10, a photorecording layer 1 and a pressure sensitive adhesive layer 2 are laminated, and release film I 3 and release film II 4 are laminated to the outer faces of the photorecording layer 1 and the pressure sensitive adhesive layer 2, respectively.

The material forming the photorecording layer in the pressure sensitive adhesive sheet of the present invention is not particularly limited as long as the material comprises a photosensitive material (a photoreactive component), and a material can be suitably selected as desired from conventional materials constituting a photorecording layer in photorecording media. Examples of the material described above include the above photosensitive materials used singly and materials obtained by impregnating the photosensitive materials into materials constituting a matrix.

The material constituting a matrix may be an inorganic material or an organic material. From the standpoint of the easiness of production of the pressure sensitive adhesive sheet and the number of types available for selection of the material, organic macromolecular materials are preferable. The macromolecular material may be a homopolymer or a copolymer, and the type of the monomer, the molecular weight and the form of the polymerization are not particularly limited.

Examples of the macromolecular material include polyolefins such as various types of polyethylene, ethylene/1-butene copolymers, ethylene/4-methyl-1-pentene copolymers, ethylene/1-hexene copolymers, polypropylene, ethylene/propylene copolymers, propylene/1-butene copolymers, poly(1-butene), 1-butene/4-methyl-1-pentene copolymers, poly(4-methyl-1-pentene), poly(3-methyl-1-butene), ethylene/cyclic olefin copolymers and cyclic olefin-based resins; ethylene/vinyl acetate copolymers; ethylene/acrylic acid copolymers and metal salts thereof; poly(meth)acrylates such as polymethyl methacrylate and alicyclic acrylic resins; polyester resins such as polyethylene terephthalate and polyethylene naphthalate; fluororesins such as polyperfluoroethylene and perfluoroalkenyl vinyl ether polymers; polystyrene; polyvinyl alcohol; polycarbonate; polyphenylene sulfide; polyether sulfone; polyimide; polyphenylene oxide; olefin/N-substituted maleimide copolymers; ally carbonate resins; epoxy acrylate resins; and urethane acrylate resin. The macromolecular material may be used singly or in combination of two or more.

The photosensitive material may be used in the form chemically bonded to the above matrix as a component of the main chain or the side chains or may be used by simply dispersing or dissolving into the above matrix. The photosensitive material is not particularly limited. Examples of the photosensitive material include materials isomerized by irradiation with light such as compounds having azo group, C=C group and C=N group; materials polymerized by irradiation with light such as (meth)acrylate compounds; organic photochromic materials such as spiropyrans, spirooxazines, fulgides, diarylethenes and diisoindolylethenes; and organic photorefractive materials comprising photoconductive organic compounds such as phthalocyanine pigments, squalic acid pigments, azo pigments, perylene pigments, thiapyrilium pigments, quinacridone pigments, azulenium pigments, anthraquinone pigments, fullerene derivatives, carbazole derivatives, dihaloanthrenediones, epiindolidiones, trihalopyrathrenediones, tetrahalothioindigos, benzothiazole derivatives, oxazole derivatives, hydrazone derivatives, quinoline derivatives and fluorenone derivatives.

In the pressure sensitive adhesive sheet of the present invention, the thickness of the above photorecording layer is not particularly limited. The thickness is, in general, in the range of about 0.1 to 50 µm and preferably in the range of 0.5 to 10 µm.

In the pressure sensitive adhesive sheet of the present invention in which the pressure sensitive adhesive layer comprises a pressure sensitive adhesive layer, a material exhibiting tackiness at the temperature of lamination in the preparation of the multilayer structured article for photorecording media and adhesive to the photorecording layer is used as the pressure sensitive adhesive constituting the pressure sensitive adhesive layer. From the standpoint of the optical applications, acrylic pressure sensitive adhesives are preferable as the pressure sensitive adhesive.

As the acrylic pressure sensitive adhesive, for example, adhesives comprising a copolymer of a (meth)acrylic ester can be used. A crosslinking agent may be added to the pressure sensitive adhesive so that the cohesive force of the adhesive is enhanced to prevent the adhesive from being expelled to the outside of the laminate.

Examples of the above crosslinking agent include polyisocyanate compounds, epoxy resins, melamine resins, urea resins, dialdehydes, methylol polymers, azilidine-based compounds, metal chelate compounds, metal alkoxides and metal salts. Among these agents, polyisocyanate compounds are preferable.

Examples of the polyisocyanate compound include aromatic polyisocyanates such as tolylene diisocyanate, diphenylmethane diisocyanate and xylylene diisocyanate; aliphatic polyisocyanates such as hexamethylene diisocyanate; alicyclic polyisocyanates such as isophorone diisocyanate and hydrogenated diphenylmethane diisocyanate; biuret compounds and isocyanurates of the above isocyanates; and adducts of the above isocyanates which are reaction products with low molecular weight compounds having active hydrogen such as ethylene glycol, propylene glycol, neopentyl glycol, trimethylolpropane and caster oil. The crosslinking agent may be used singly or in combination of two or more.

Examples of the (meth)acrylic ester-based copolymer include copolymers of a (meth)acrylic ester in which the alkyl group in the ester portion has 1 to 20 carbon atoms, a monomer having a functional group having active hydrogen and other monomers which are used where desired.

Examples of the (meth)acrylic ester in which the alkyl group in the ester portion has 1 to 20 carbon atoms include methyl (meth)acrylate, ethyl (meth)acrylate, propyl (meth)acrylate, butyl methacrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate and stearyl (meth)acrylate. The (meth)acrylic ester may be used singly or in combination of two or more.

Examples of the monomer having a functional group having active hydrogen include hydroxyalkyl esters of (meth)acrylic acid such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; acrylamides such as acrylamide, methacrylamide, N-methylacrylamide, N-methylmethacrylamide, N-methylolacrylamide and N-methylolmethacrylamide; monoalkylaminoalkyl (meth)acrylates such as monomethylaminoethyl (meth)acrylate, monoethylaminoethyl (meth)acrylate, monomethylaminopropyl (meth)acrylate and monoethylaminopropyl (meth)acrylate; and ethylenically unsaturated carboxylic acids such as acrylic acid, methacrylic acid, crotonic acid, maleic acid, itaconic acid and citraconic acid. The above monomer may be used singly or in combination of two or more.

Examples of the other monomer which is used where desire include vinyl esters such as vinyl acetate and vinyl propionate; olefins such as ethylene, propylene and isobutylene; halogenated olefins such as vinyl chloride and vinylidene chloride; styrene-based monomers such as styrene and α-methylstyrene; diene-based monomers such as butadiene, isoprene and chloroprene; nitrile-based monomers such as acrylonitrile and methacrylonitrile; and N,N-dialkyl substituted acrylamides such as N,N-dimethylacrylamide and N,N-dimethylmethacrylamide. The other monomer may be used singly or in combination of two or more.

The form of copolymerization of the (meth)acrylic ester-based copolymer used as the resin component in the acrylic pressure sensitive adhesive is not particularly limited and may be any of the random copolymer, the block copolymer and the graft copolymer. It is preferable that the weight-average molecular weight is in the range of 500,000 to 2,000,000.

The above weight-average molecular weight is the value obtained in accordance with the gel permeation chromatography (GPC) and expressed as the value of the corresponding polystyrene.

In the present invention, a single type or a combination of two or more types of the (meth)acrylic ester-based copolymer may be used.

To the pressure sensitive adhesive of the present invention, tackifiers, antioxidants, ultraviolet light absorbents, photostabilizers, softeners and fillers may be added as long as the object of the present invention is not adversely affected.

In the present invention, the thickness of the above pressure sensitive adhesive is not particularly limited. The thickness is, in general, in the range of about 1 to 100 µm and preferably in the range of 2 to 50 µm.

In the pressure sensitive adhesive sheet of the present invention, when the pressure sensitive adhesive layer comprises a layer of the energy hardening type, the pressure sensitive adhesive constituting the pressure sensitive adhesive layer is a pressure sensitive adhesive of the energy hardening type. The pressure sensitive adhesive exhibits tackiness at the temperature of lamination in the preparation of the multilayer structured article for photorecording media, is adhesive to the photorecording layer, and is hardened by application of energy to increase the hardness after the multilayer structured article for photorecording media is prepared so that the function of suppressing formation of press marks on the multilayer photorecording medium is exhibited.

The pressure sensitive adhesive of the energy hardening type is not particularly limited as long as the adhesive exhibits the above function and can be used for optical applications, and can be suitably selected from conventional pressure sensitive adhesives of the energy hardening type.

As the pressure sensitive adhesive of the energy hardening type, for example, a pressure sensitive adhesive of the heat hardening type or the energy beam hardening type can be used. The pressure sensitive adhesive of the energy hardening type includes acrylic pressure sensitive adhesives, silicone-based pressure sensitive adhesives and rubber-based pressure sensitive adhesives. In the present invention, the acrylic pressure sensitive adhesives of the energy hardening type are preferable from the standpoint of the optical applications.

Examples of the acrylic pressure sensitive adhesive of the energy hardening type include (1) pressure sensitive adhesives comprising a pressure sensitive adhesive acrylic polymer, a polymerizable oligomer of the energy hardening type and/or a polymerizable monomer and a polymerization initiator which is used where desired and (2) pressure sensitive adhesives comprising a pressure sensitive adhesive acrylic polymer in which a functional group of the energy hardening type having a polymerizable double bond is introduced into the side chain and a polymerization initiator which is used where desired.

In the pressure sensitive adhesive described above in (1), examples of the pressure sensitive adhesive acrylic polymer include copolymers of a (meth)acrylic ester in which the alkyl group in the ester portion has 1 to 20 carbon atoms and, where desired, a monomer having a functional group having active hydrogen atom and other monomers.

Examples of the (meth)acrylic ester in which the alkyl group in the ester portion has 1 to 20 carbon atoms include methyl (meth)acrylate, ethyl (meth)acrylate, propyl (meth)acrylate, butyl methacrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate and stearyl (meth)acrylate. The (meth)acrylic ester may be used singly or in combination of two or more.

Examples of the monomer having a functional group having active hydrogen which is used where desired include hydroxyalkyl esters of (meth)acrylic acid such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; monoalkylaminoalkyl (meth)acrylates such as monomethylaminoethyl (meth)acrylate, monoethylaminoethyl (meth)-acrylate, monomethylaminopropyl (meth)acrylate and monoethylaminopropyl (meth)acrylate; and ethylenically unsaturated carboxylic acids such as acrylic acid, methacrylic acid, crotonic acid, maleic acid, itaconic acid and citraconic acid. The above monomer may be used singly or in combination of two or more.

Examples of the other monomer which is used where desire include vinyl esters such as vinyl acetate and vinyl propionate; olefins such as ethylene, propylene and isobutylene; halogenated olefins such as vinyl chloride and vinylidene chloride; styrene-based monomers such as styrene and α-methylstyrene; diene-based monomers such as butadiene, isoprene and chloroprene; nitrile-based monomers such as acrylonitrile and methacrylonitrile; and acrylamides such as acrylamide, N-methylacrylamide and N,N-dimethyl- acrylamide. The other monomer may be used singly or in combination of two or more.

The form of copolymerization of the (meth)acrylic ester-based copolymer used as the pressure sensitive adhesive acrylic polymer in the pressure sensitive adhesive described above is not particularly limited and may be any of the random copolymer, the block copolymer and the graft copolymer. It is preferable that the weight-average molecular weight is 300,000 or greater.

The above weight-average molecular weight is the value obtained in accordance with the gel permeation chromatography (GPC) and expressed as the value of the corresponding polystyrene.

In the present invention, a single type or a combination of two or more types of the (meth)acrylic ester-based copolymer may be used.

Examples of the polymerizable oligomer of the energy hardening type include polyester acrylate-based oligomers, epoxy acrylate-based oligomers, urethane acrylate-based oligomers, polyether acrylate-based oligomers, polybutadiene acrylate-based oligomers and silicone acrylate-based oligomers. The polyester acrylate-based oligomers can be obtained, for example, by obtaining a polyester oligomer having hydroxyl groups at both ends by condensation of a polyfunctional carboxylic acid with a polyhydric alcohol, followed by esterification of the hydroxyl groups in the obtained oligomer with (meth)acrylic acid; or by obtaining an oligomer having hydroxyl groups at both ends by addition of an alkylene oxide to a polyfunctional carboxylic acid, followed by esterification of the hydroxyl groups of the obtained oligomer with (meth)acrylic acid. The epoxy acrylate-based prepolymer can be obtained, for example, by esterification of oxirane rings in an epoxy resin of a bisphenol type or a novolak type having a relatively low molecular weight by the reaction with (meth)acrylic acid. Epoxy acrylate oligomers modified with carboxyl group which are obtained by partially modifying the above epoxy acrylate oligomer with a dibasic carboxylic acid anhydride can also be used. The urethane acrylate-based prepolymer can be obtained, for example, by the reaction of a polyether polyol or a polyester polyol with a polyisocyanate to obtain a polyurethane oligomer, followed by esterification of the obtained polyurethane oligomer with (meth)acrylic acid. The polyol acrylate-based prepolymer can be obtained, for example, by esterification of hydroxyl groups in a polyether polyol with (meth)acrylic acid.

It is preferable that the weight-average molecular weight of the above polymerizable oligomer is selected in the range of 500 to 100,000, more preferably in the range of 1,000 to 70,000 and most preferably in the range of 3,000 to 40,000. The above weight-average molecular weight is the value obtained in accordance with the gel permeation chromatography (GPC) and expressed as the value of the corresponding polystyrene.

The above polymerizable oligomer may be used singly or in combination of two or more.

Examples of the polymerizable monomer of the energy hardening type include monofunctional (meth)acrylates such as cyclohexyl (meth)acrylate, 2-ethylhexyl (meth)acrylate, lauryl (meth)acrylate, stearyl (meth)acrylate and isobornyl (meth)acrylate, 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, neopentyl glycol hydroxypivalate di(meth)acrylate, dicyclopentanyl di(meth)acrylate, dicyclopentenyl di(meth)acrylate modified with caprolactone, phosphoric acid di(meth)acrylate modified with ethylene oxide, cyclohexyl di(meth)acrylate modified with allyl group, isocyanurate di(meth)acrylate, trimethylolpropane tri(meth)acrylate, dipentaerythritol tri(meth)acrylate, dipentaerythritol tri(meth)acrylate modified with propionic acid, pentaerythritol tri(meth)acrylate, trimethylolpropane tri(meth)acrylate modified with propylene oxide, tris(acryloxyethyl) isocyanurate, dipentaerythritol penta(meth)acrylate modified with propionic acid, dipentaerythritol hexa(meth)acrylate and dipentaerythritol hexa(meth)-acrylate modified with caprolactone. The polymerizable monomer may be used singly or in combination of two or more.

The amounts of the polymerizable oligomer and the polymerizable monomer are selected in a manner such that the pressure sensitive adhesive has the properties described below after being hardened by application of energy.

As the polymerization initiator which is used where desired, an organic peroxide or an azo-based compound is used when the pressure sensitive adhesive of the energy hardening type is a pressure sensitive adhesive of the heat hardening type. Examples of the organic peroxide include dialkyl peroxides such as di-t-butyl peroxide, t-butyl cumyl peroxide and dicumyl peroxide; diacyl peroxides such as acetyl peroxide, lauroyl peroxide and benzoyl peroxide; ketone peroxides such as methyl ethyl ketone peroxide, cyclohexanone peroxide, 3,3,5-trimethylcyclohexanone peroxide and methylcyclohexanone peroxide; peroxyketals such as 1,1-bis(t-butylperoxy)cyclohexane; hydroperoxides such as t-butyl hydroperoxide, cumene hydroperoxide, 1,1,3,3-tetramethylbutyl hydroperoxide, p-menthane hydroperoxide, diisopropylbenzene hydroperoxide and 2,5-dimethylhexane 2,5-dihydroperoxide; and peroxy esters such as t-butyl peroxyacetate, t-butyl peroxy-2-ethylhexanoate, t-butyl peroxybenzoate and t-butyl peroxyisopropyl carbonate.

Examples of the azo-based compound include 2,2'-azobis(4-methoxy-2,4-dimethylvaleronitrile), 2,2'-azobis(2-cyclopropylpropionitrile), 2,2'-azobis(2,4-dimethylvaleronitrile), azobisisobutyronitrile, 2,2'-azobis(2-methylbutyronitrile) 1,1'-azobis(cyclohexane-1-carbonitrile), 2-(carbamoylazo)isobutyronitrile and 2-phenylazo-4-methoxy-2,4-dimethylvaleronitrile.

The above polymerization initiator may be used singly or in combination of two or more.

When the pressure sensitive adhesive of the energy hardening type is a pressure sensitive adhesive of the energy beam hardening type, in general, ultraviolet light or electron beams are used as the energy beam for the irradiation. When ultraviolet light is used for the irradiation, a photopolymerization initiator can be used as the polymerization initiator. Examples of the photopolymerization initiator include benzoin, benzoin methyl ether, benzoin ethyl ether, benzoin isopropyl ether, benzoin n-butyl ether, benzoin isobutyl ether, acetophenone, dimethylacetophenone, 2,2-dimethoxy-2-phenyl- acetophenone, 2,2-diethoxy-2-phenylacetophenone, 2-hydroxy-2-methyl-1-phenylpropane-1-one, 1-hydroxycyclohexyl phenyl ketone, 2-methyl-1-[4-(methylthio)phenyl]-2-morpholinopropane-1-one, 4-(2-hydroxyethoxy)phenyl 2-(hydroxy-2-propyl) ketone, benzophenone, p-phenylbenzophenone, 4,4'-diethylaminobenzophenone, dichlorobenzophenone, 2-methylanthraquinone, 2-ethylanthraquinone, 2-tertiarybutylanthraquinone, 2-aminoanthraquinone, 2-methyl- thioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoic acid esters and oligo(2-hydroxy-2-methyl-1-[4-(1-propenyl)phenyl)propane). The photopolymerization initiator may be used singly or in combination of two or more.

Examples of the pressure sensitive adhesive acrylic polymer in which a functional group of the energy hardening type having a polymerizable double bond is introduced into the side chain, which is used in the pressure sensitive adhesive described above in (2), include polymers prepared by introducing a functional group of the energy hardening type having a polymerizable double bond into the side chain of the pressure sensitive adhesive acrylic polymer, i.e., by introducing a functional group such as -COOH, -NCO, epoxy group, -OH and -NH₂ into the polymer chain of the pressure sensitive adhesive acrylic polymer described for the pressure sensitive adhesive in (1), followed by reacting a compound having a polymerizable double bond with the introduced functional group.

The functional group described above can be introduced into the pressure sensitive adhesive acrylic polymer when a monomer or an oligomer having a functional group such as -COOH, -NCO, epoxy group, -OH and -NH₂ and a polymerizable double bond is present in the reaction system.

Specifically, when the pressure sensitive adhesive acrylic polymer described for the pressure sensitive adhesive in (1) is produced, (meth)acrylic acid or the like can be used for introducing -COOH group, (meth)acryloxyethyl isocyanate or the like can be used for introducing -NCO group, glycidyl (meth)acrylate or the like can be used for introducing epoxy group, 2-hydroxyethyl (meth)acrylate, 1,6-hexanediol mono(meth)acrylate or the like can be used for introducing -OH group, and N-methyl(meth)acrylamide can be used for introducing -NH₂ group.

As the compound having a polymerizable double bond which is used for the reaction with the functional group, a compound can be suitably selected from (meth)acryloxyethyl isocyanate, glycidyl (meth)acrylate, pentaerythritol mono(meth)acrylate, dipentaerythritol mono(meth)-acrylate and trimethylolpropane mono(meth)acrylate in accordance with the type of the active point.

The pressure sensitive adhesive acrylic polymer having a functional group of the energy hardening type having a polymerizable double bond which is introduced into the side chain of the pressure sensitive adhesive acrylic polymer via the functional group can be obtained as described above.

As the polymerization initiator used where desired, organic peroxides and azo-based compounds described as the examples of the organic peroxide and the azo-based compound in the pressure sensitive adhesive in (1) can be used when the pressure sensitive adhesive of the energy hardening type is a pressure sensitive adhesive of the heat hardening type. When the pressure sensitive adhesive of the energy hardening type is a pressure sensitive adhesive of the energy beam hardening type, and ultraviolet light is used as the energy beam, the photopolymerization initiators described as the examples of the photopolymerization initiator in the pressure sensitive adhesive in (1) can be used.

To the pressure sensitive adhesive of the energy hardening type shown in (1) and (2), where desired, crosslinking agents, tackifiers, antioxidants, ultraviolet light absorbents, photostabilizers, softening agents and fillers can be added as long as the effects of the present invention are not adversely affected.

As the crosslinking agent, an agent can be suitably selected in accordance with the object from the crosslinking agents described above as the examples of the crosslinking agents which can be used when the pressure sensitive adhesive sheet of the present invention comprises a laminate of a photorecording layer and a pressure sensitive adhesive layer.

From the stand points of adhesiveness with the photorecording layer and suppressing formation of press marks of multilayer photorecording media, it is preferable that the adhesive of the energy hardening type used in the present invention has a storage modulus in the range of 10³ to smaller than 10⁷ Pa before being hardened and in the range of 10⁷ to 10¹¹ Pa after being hardened, as measured in accordance with the method described below. It is more preferable that the storage modulus is in the range of 10⁴ to 10⁶ Pa before being hardened and in the range of 10⁸ to 10¹⁰ Pa after being hardened.

In the pressure sensitive adhesive sheet of the present invention, thickness of the pressure sensitive adhesive layer of the energy hardening type described above is not particularly limited. The thickness is, in general, in the range of about 1 to 100 µm and preferably in the range of about 2 to 20 µm.

In the pressure sensitive adhesive sheet of the present invention, release films I and II laminated at the outer faces of the photorecording layer and the pressure sensitive adhesive layer, respectively, are not particularly limited. Examples of the release film include polyolefin films such as polyethylene films and polypropylene films and films prepared by forming a release layer on polyolefin films such as those described above, polyester films such as polyethylene terephthalate films and papers such as glassine paper, coated paper and laminate paper with polyolefin by coating with release agents such as silicone resins. Release films I and II may be the same with or different from each other. The thickness of release films I and II is not particularly limited. The thickness is, in general, in the range of about 20 to 150 µm.

In both cases where the pressure sensitive adhesive layer comprises the pressure sensitive adhesive layer and the pressure sensitive adhesive layer comprises the pressure sensitive adhesive of the energy hardening type, release films I and II described above can be selected from the films described above as the examples having a thickness in the range described above in accordance with the object.

The process for producing the pressure sensitive adhesive sheet of the present invention is not particularly limited. For example, when a pressure sensitive adhesive sheet having the construction of layers shown in Figure 1 is produced, the process described in the following can be conducted.

As the first step, a coating fluid containing the material for forming the photorecording layer in a suitable concentration is applied to the face of release film I having the releasing property in an amount such that the formed coating film has the prescribed thickness after being dried in accordance with a process such as the knife coating process, the roll coating process, the bar coating process, the blade coating process, the die coating process and the gravure coating process. The formed coating film is dried to form a photorecording layer, and thus a laminate of the photorecording layer and release film I is prepared.

Separately, a coating fluid containing the pressure sensitive adhesive and a crosslinking agent which is used where desired in suitable concentrations is applied to the release layer of release film II in an amount such that the formed coating film has the prescribed thickness after being dried in accordance with a process such as the knife coating process, the roll coating process, the bar coating process, the blade coating process, the die coating process and the gravure coating process. The formed coating film is dried, and a pressure sensitive adhesive layer is formed.

Then, the laminate of the photorecording layer and release film I prepared above is placed on the face of the pressure sensitive adhesive layer in a manner such that the photorecording layer is brought into contact with the pressure sensitive adhesive layer, and the formed combination is pressed together by rubber rolls or the like. Thus, the pressure sensitive adhesive sheet of the present invention shown in Figure 1 can be obtained.

The pressure sensitive adhesive sheet obtained as described above is advantageously used as the material for producing the multilayer structured article for photorecording media of the present invention shown in the following.

In the present invention, the multilayer structured article for photorecording media is formed by using the pressure sensitive adhesive sheet of the present invention described above and has a construction such that the photorecording layer and the pressure sensitive adhesive layer as the non-recording layer are laminated alternately. The pressure sensitive adhesive layer works as the non-recording layer for suppressing cross-talk of data in the photorecording medium.

In the present invention, the multilayer structured article for photorecording media is formed by using the pressure sensitive adhesive sheet of the present invention described above and is an article having a construction such that the photorecording layer and the pressure sensitive adhesive layer as the non-recording layer are laminated alternately. The numbers of the photorecording layers and the pressure sensitive adhesive layers in the laminate are not each particularly limited. The numbers of the layers are each, in general, in the range of about 2 to 1,000 and preferably in the range of 5 to 500. When the number of the layer is one, the sufficient recording density cannot be obtained. When the number of the layer exceeds 1,000, there is the possibility that writing and reading information are adversely affected due to absorption of light with each layer and reflection of light at the interface of the layers. The thickness of the entire laminate comprising the photorecording layers and the pressure sensitive adhesive layers is, in general, in the range of about 10 µm to 5 mm, preferably in the range of 20 µm to 2 mm and more preferably in the range of 50 µm to 1.2 mm.

Figure 2 shows a sectional view exhibiting an embodiment of the construction of the multilayer structured article for photorecording media of the present invention. The multilayer structured article for photorecording media 20 has a structure such that a pressure sensitive adhesive layer 6 is disposed on a substrate 5 made of a polycarbonate resin or the like; photorecording layers and pressure sensitive adhesive layers are alternately laminated on the pressure sensitive adhesive layer 6 to form a photorecording layer 1-1, a pressure sensitive adhesive layer 2-1, a photorecording layer 1-2, a pressure sensitive adhesive layer 2-2, a photorecording layer 1-3, a pressure sensitive adhesive layer 2-3, ···, a photorecording layer 1-n, and a pressure sensitive adhesive layer 2-n; and release film II 4 is disposed as the uppermost layer.

The multilayer structured article for photorecording media 20 having the above structure can be obtained, for example, as follows. Release film I 3 is removed from the pressure sensitive adhesive sheet 10 shown above in Figure 1. The pressure sensitive adhesive sheet 10 and the substrate 5 having the pressure sensitive adhesive layer 6 are laminated in a manner such that the exposed photorecording layer 1 (a photorecording layer 1-1 in Figure 2) and the pressure sensitive adhesive layer 6 on the substrate 5 are faced to each other. Release film II 4 is removed from the obtained laminate, and a pressure sensitive adhesive layer 2-1 is exposed. The obtained laminate and another pressure sensitive adhesive sheet 10 are laminated in a manner such that the pressure sensitive adhesive layer 2-1 and the photorecording layer 1 (a photorecording layer 1-2 in Figure 2) exposed by removing release film I 3 from the other pressure sensitive adhesive sheet 10 are faced to each other. The lamination is continued by repeating the above procedures successively, and a laminate having n photorecording layers is prepared. Thus, the multilayer structured article for photorecording media 20 can be obtained in this manner. When the pressure sensitive adhesive layer comprises the pressure sensitive adhesive layer of the energy hardening type, the multilayer structured article for photorecording media 20 can be obtained by hardening the pressure sensitive adhesive layer by a heat treatment of the obtained laminate or by irradiation of the obtained laminate with an ionizing radiation.

When the pressure sensitive adhesive layer is hardened by the heat treatment of the above laminate, the heat treatment is conducted at a temperature, in general, in the range of 50 to 200°C and preferably in the range of 70 to 150°C for about 1 to 60 minutes. When the pressure sensitive adhesive layer is hardened by irradiation of the laminate with an energy beam, in general, ultraviolet light or electron beams are used as the energy beam. Ultraviolet light can be obtained from a high voltage mercury lamp, a fusion H lamp or a xenon lamp. Electron beams are obtained from an electron beam accelerator. Among these energy beams, ultraviolet light is preferable. The amount of the energy beam is suitably selected so that the storage modulus of the pressure sensitive adhesive layer after being hardened is within the above range.

The pressure sensitive adhesive in the pressure sensitive adhesive layer 6 disposed on the substrate 5 may be the same as or different from that forming the pressure sensitive adhesive layers of the pressure sensitive adhesive sheet.

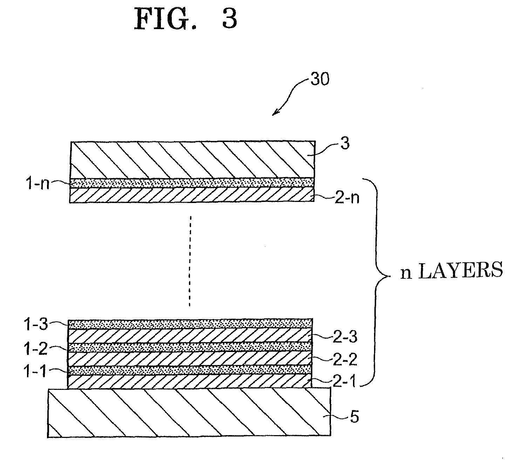

Figure 3 shows a sectional view exhibiting another embodiment of the construction of the multilayer structured article for photorecording media of the present invention. The multilayer structured article for photorecording media 30 has a structure such that pressure sensitive adhesive layers and photorecording layers are alternately laminated on a substrate 5 made of a polycarbonate resin or the like to form a pressure sensitive adhesive layer 2-1, a photorecording layer 1-1, a pressure sensitive adhesive layer 2-2, a photorecording layer 1-2, a pressure sensitive adhesive layer 2-3, a photorecording layer 1-3, ···, a pressure sensitive adhesive layer 2-n, and a photorecording layer 1-n, and release film I 3 is disposed as the uppermost layer.

The multilayer structured article for photorecording media 30 having the above structure can be obtained, for example, as follows. Release film II 4 is removed from the pressure sensitive adhesive sheet 10 shown above in Figure 1. The pressure sensitive adhesive sheet 10 and the substrate 5 are laminated in a manner such that the exposed pressure sensitive adhesive layer 2 (a pressure sensitive adhesive layer 2-1 in Figure 3) and the substrate 5 are faced to each other. Release film I 3 is removed from the obtained laminate, and the photorecording layer 1-1 is exposed. The obtained laminate and another pressure sensitive adhesive sheet 10 are laminated in a manner such that the photorecording layer 1-1 and the pressure sensitive adhesive layer 2 (a pressure sensitive adhesive layer 2-2 in Figure 3) exposed by removing release film II 4 from the other pressure sensitive adhesive sheet 10 are faced to each other. The lamination is continued by repeating the above procedures successively, and a laminate having n photorecording layers is prepared. Thus, the multilayer structured article for photorecording media 30 can be obtained in this manner. When the pressure sensitive adhesive layer comprises the pressure sensitive adhesive layer of the energy hardening type, the multilayer structured article for photorecording media 30, in which the pressure sensitive adhesive layer is the pressure sensitive adhesive layer of the energy hardening type in the present invention, can be obtained by hardening the pressure sensitive adhesive layer by a heat treatment of the obtained laminate or by irradiation of the obtained laminate with an ionizing radiation in a manner similar to that for obtaining the multilayer structured article shown in Figure 2.

The multilayer structured article for photorecording media having the above construction, in which the pressure sensitive adhesive layer is the pressure sensitive adhesive layer of the energy hardening type in the present invention, has a dynamic hardness in the range of about 0.3 to 1.0 as measured in accordance with the method described below, for example, when 10 layers of the pressure sensitive adhesive sheet of the present invention are laminated to a substrate of a polycarbonate resin, and the formation of press marks on this article is suppressed.

Release film II 4 and release film I 3 are disposed as the uppermost layer of the multilayer structured articles for photorecording media 20 and 30, respectively, obtained as described above. In the present invention, release films I and II may be removed and replaced with other films such as protective films transmitting light and protective films transmitting light and having a pressure sensitive adhesive layer. The protective film transmitting light is not particularly limited and can be suitably selected from conventional protective films used as the protective film for photorecording media. The thickness of the protective film is not particularly limited. The thickness is, in general, in the range of 20 to 600 µm and preferably in the range of 20 to 150 µm. As the pressure sensitive adhesive forming the above pressure sensitive adhesive layer, acrylic pressure sensitive adhesives are preferable. The thickness of the pressure sensitive adhesive layer is, in general, in the range of about 5 to 60 µm.

When the lamination is conducted in accordance with the spin coating process conventionally used for preparation of multilayer photorecording media, it is necessary that each layer is not invaded with the solvent. Therefore, there is a great restriction in the selection of the photosensitive material, the matrix material and the material used for the non-recording layer disposed between the photorecording layers. In contrast, the above problem is absent when the above multilayer structured article is prepared using the pressure sensitive adhesive sheet of the present invention, and various materials can be selected in accordance with the object.

When a photorecording medium is prepared in accordance with the spin coating process, it is difficult that an article having a great area is prepared, and the productivity is small. When the pressure sensitive adhesive sheet of the present invention is used, preparation of the photorecording media in the form of a roll is made possible. Therefore, the productivity is great, and the restriction on the shape is small.

The accuracy of the thickness is greater in comparison with that of the layers formed in accordance with the spin coating process. Since sheets having the same thickness can be laminated to form a laminate having many layers, the thickness of each layer is substantially the same, and the restriction on the number of layers in the lamination is small.

The present invention also provides a photorecording medium comprising the above multilayer structured article for photorecording media.

The method for recording and reading information using the photorecording medium of the present invention is not particularly limited and can be suitably selected from conventional methods of recording and reading information using photorecording media.

To summarize the advantages obtained by the invention, in accordance with the present invention, the pressure sensitive adhesive sheet comprising a photorecording layer with which the multilayer photorecording medium exhibiting excellent accuracy of thickness of individual layers and the entire laminate can be produced easily without restriction on the material and the multilayer photorecording medium having a great area can be produced, the multilayer structured article for photorecording media formed by using the pressure sensitive adhesive sheet and the multilayer photorecording medium comprising the multilayer structured article and exhibiting excellent accuracy of thickness of individual layers and the entire laminate, as the first object of the present invention, can be provided. Moreover, in addition to the first object described above, the second object of the present invention is also achieved by using the pressure sensitive adhesive layer of the energy hardening type as the pressure sensitive adhesive layer.

### EXAMPLES

The present invention will be described more specifically with reference to examples in the following. However, the present invention is not limited to the examples.

In the following Examples and Comparative Examples, the properties of the obtained multilayer structural articles were evaluated in accordance with the following methods.
(1) Depth of depression by a pressing rod and dynamic hardness
   A load was applied to a multilayer structured article up to a test force of 5 mN using a dynamic fine hardness meter [manufactured by SHIMADZU SEISAKUSHO Co., Ltd.; the name of the apparatus: "DUH-W201"]. The load was kept for 2 seconds, and the depth of depression and the dynamic hardness were measured.
(2) Storage modulus of a pressure sensitive adhesive layer or a pressure sensitive adhesive layer before being hardened
   The storage modulus of an pressure sensitive adhesive layer or a pressure sensitive adhesive layer constituting a multilayer structured article before being hardened was measured using an apparatus for measuring viscoelasticity [manufactured by RHEOMETRICS Company; the name of the apparatus: "DYNAMIC ANALYZER RDAII"] at 1 Hz at 25°C.
(3) Storage modulus of a pressure sensitive adhesive layer after being hardened
   The storage modulus of a pressure sensitive adhesive layer constituting a multilayer structured article after being hardened under the same condition as that in the preparation of the multilayer structured article was measured using an apparatus for measuring viscoelasticity [manufactured by ORIENTECH Company; the name of the apparatus: "RHEOVIBRON DDV-II-EP"] at 3.5 Hz at 25°C.
(4) Property of suppressing formation of press marks
   A multilayer structured article was placed on a flat glass plate in a manner such that the polycarbonate film was placed downward. On the article, four iron balls having a diameter of 2 mm were placed in a shape of a square having edges of 2 cm. Then, a glass plate was placed on the iron balls in a manner such that the glass plate covered the four iron balls, and a weight was placed on the glass plate. The total of the weights of the glass plate and the weight was adjusted at 200 g. After 1 minute, the weight, the glass plate and the iron ball were removed, and the presence or the absence of press marks on the surface of the multilayer structured article was visually observed. The property of suppressing formation of press marks was evaluated in accordance with the following criterion:
   good: No press marks were found.
   poor: Press marks were found.

### Example 1

(1) Formation of a photorecording layer
   Polymethyl methacrylate in an amount of 100 g, 10 g of 1,3,3-trimethylindolino-6'-nitrobenzopyrylospirane which was a photochromic material, 500 g of ethyl acetate and 490 g of toluene were mixed, and a coating fluid having a concentration of solid substances of 10% by weight was prepared.
   The coating fluid prepared above was applied to one face of a polypropylene film having a thickness of 40 µm as release film I in accordance with the gravure coating process, and the formed coating film was dried at 90°C for 1 minute. The thickness of the obtained coating film (the photorecording layer) was measured and found to be about 1.5 µm as the average of the measurements at 20 points with a dispersion of ±0.2 µm.
(2) Formation of a pressure sensitive adhesive layer
   To 100 parts by weight of an ethyl acetate solution containing an n-butyl acrylate/acrylic acid copolymer (the ratio of the contents by weight: 99/1) in an amount of 30% by weight as the concentration of the solid component, 1.0 parts by weight of an isocyanate-based crosslinking agent [manufactured by SOKEN KAGAKU Co., Ltd.; the trade name: "TD-75"; the concentration of solid components: 75% by weight) was added. The resultant mixture was stirred until a homogeneous solution was obtained, and a coating fluid (a pressure sensitive adhesive) was prepared.
   Then, the coating fluid prepared above was applied to release film II obtained by forming a silicone release layer on one face of a polyethylene terephthalate film having a thickness of 38 µm on the face having the release layer by a knife coater. The formed coating layer was dried by heating at 90°C for 1 minute, and a pressure sensitive adhesive layer was formed. The thickness of the obtained pressure sensitive adhesive film was about 8.0 µm as the average of the measurements at 20 points with a dispersion of ± 1.0 µm.
(3) Preparation of a pressure sensitive adhesive sheet
   The dried pressure sensitive adhesive layer formed in (2) described above and the photorecording layer formed in (1) described above were combined in a manner such that the face of the photorecording layer is brought into contact with the face of the pressure sensitive adhesive layer, and the formed combination is pressed together by two rubber rolls, and a laminate having the photorecording layer and the pressure sensitive adhesive layer was prepared. Twenty pressure sensitive adhesive sheets having the construction shown in Figure 1 in which the photorecording layer and the pressure sensitive adhesive layer were laminated were prepared in this manner.
(4) Preparation of a multilayer structured article
   A pressure sensitive adhesive layer having a thickness of 8.0 µm was formed on one face of a polycarbonate film [manufactured by TEIJIN KASEI Co., Ltd.] having a thickness of 75 µm using a pressure sensitive adhesive having the same composition as that described above in (2).
   The photorecording layer in a sheet obtained by removing the polypropylene film of release film I from the pressure sensitive adhesive sheet obtained in (3) described above and the pressure sensitive adhesive layer of the polycarbonate film described above were laminated and pressed together by two rubber rolls.
   The polyethylene terephthalate film of release film II was removed from the obtained laminate. The exposed pressure sensitive adhesive layer and the photorecording layer of another pressure sensitive adhesive sheet exposed by removing the polypropylene film were laminated and pressed together by two rubber rolls. The lamination was successively repeated in accordance with the above procedures, and a multilayer structured article shown in Figure 2 having 20 photorecording layers was prepared.
   The thickness of the obtained multilayer structured article including the polycarbonate film was measured and found to be 270 µm as the average of the measurements at 20 points with a dispersion of ± 3.0 µm. The above measurement was conducted after the polyethylene terephthalate film which was release film II of the uppermost layer was removed.

### Example 2

(1) Formation of a photorecording layer
   Polymethyl methacrylate in an amount of 100 g, 10 g of cis-1,2-dicyano-1,2-bis(2,4,5-trimethyl-3-thienyl)ethene [manufactured by KANTO KAGAKU Co., Ltd.; the trade name: "B1535"] which was a diallylethene of a photochromic material, 500 g of ethyl acetate and 490 g of toluene were mixed, and a coating fluid having a concentration of solid substances of 10% by weight was prepared.
   The coating fluid prepared above was applied to release film I obtained by forming an alkyd resin release layer on a substrate of a polyethylene terephthalate film having a thickness of 38 µm on the face having the release layer in accordance with the gravure coating process. The formed coating layer was dried by heating at 90°C for 1 minute. The thickness of the obtained coating film (a photorecording film) was about 1.5 µm.
(2) Formation of a pressure sensitive adhesive layer
   To 100 parts by weight of an ethyl acetate solution containing an n-butyl acrylate/acrylic acid copolymer (the ratio of the contents by weight: 99/1) in an amount of 30% by weight as the concentration of the solid component, 1.0 parts by weight of an isocyanate-based crosslinking agent [manufactured by SOKEN KAGAKU Co., Ltd.; the trade name: "TD-75"; the concentration of solid components: 75% by weight) was added. The resultant mixture was stirred until a homogeneous solution was obtained, and a coating fluid (a pressure sensitive adhesive) was prepared.
   Then, the coating fluid prepared above was applied to release film II obtained by forming a silicone release layer on one face of a polyethylene terephthalate film having a thickness of 38 µm on the face having the release layer by a knife coater. The formed coating layer was dried by heating at 90°C for 1 minute, and a pressure sensitive adhesive layer was formed. The thickness of the obtained pressure sensitive adhesive film was about 8.0 µm as the average of the measurements at 20 points with a dispersion of ± 1.0 µm.
(3) Preparation of a pressure sensitive adhesive sheet for photorecording media
   The dried pressure sensitive adhesive layer formed in (2) described above and the photorecording layer formed in (1) described above were combined in a manner such that the face of the photorecording layer is brought into contact with the face of the pressure sensitive adhesive layer, and the formed combination is pressed together by two rubber rolls. Ten pressure sensitive adhesive sheets for photorecording media having the construction in which the photorecording layer and the pressure sensitive adhesive layer were laminated were prepared in this manner.
(4) Preparation of a multilayer structured article
   Release film II was removed from the pressure sensitive adhesive in the pressure sensitive adhesive sheet prepared in (3) described above. The exposed pressure sensitive adhesive layer in the pressure sensitive adhesive sheet and one face of a polycarbonate film [manufactured by TEIJIN KASEI Co., Ltd.; the trade name: PURE ACE C110-100"] having a thickness of 100 µm were laminated and pressed together by two rubber rolls. Release film I on the photorecording layer in the obtained laminate was removed. Ten pressure sensitive adhesive sheets were successively laminated in accordance with the above procedures, and a laminate in which 10 photorecording layers and 10 pressure sensitive adhesive layers were alternately laminated (without the hardening treatment with an energy) was prepared.
   The properties of the prepared multilayer structured article are shown in Table 1.

### Comparative Example 1

Ethyl acetate was added to the coating fluid used for forming the photorecording layer in (1) of Example 1, and a coating fluid having a concentration of solid components of 7.5% by weight was prepared. The prepared coating fluid was applied to a non-alkali glass [manufactured by CORNING Company; the product number: #1737; the size: 12.5 cm square] in accordance with the spin coating process at a speed of rotation of 900 rpm. The obtained coating layer was dried at 90°C for 1 minute, and a photorecording layer was formed. The thickness of the obtained coating layer was measured and found to be about 1.5 µm as the average of the measurements at 20 points with a dispersion of ±0.2 µm.

Toluene was added to the coating fluid used for forming the pressure sensitive adhesive layer in (2) of Example 1, and a coating fluid having a concentration of solid components of 20% by weight was prepared. The prepared coating fluid was applied in accordance with the spin coating process under the same condition. The formed coating layer was dried at 90°C for 1 minute, and a pressure sensitive adhesive layer was formed.

A section of the prepared laminate was observed by an optical microscope. It was found that the surface of the recording layer was dissolved with the coating fluid, and a disordered condition was found at the interface of the recording layer and the pressure sensitive adhesive layer.

### Comparative Example 2

A photorecording layer was formed in accordance with the same procedures as those conducted in Comparative Example 1 and, then, a 10% by weight aqueous solution of polyvinyl alcohol [manufactured by WAKO JUN-YAKU Co., Ltd.] was applied in accordance with the spin coating process under the same condition. It was found that coated portions and uncoated portions were formed unevenly except the central portion having a radius of about 3 cm, and a laminate which was uniform throughout the entire substrate could not be formed.

### [The case in which the pressure sensitive adhesive layer comprises a pressure sensitive adhesive layer of the energy hardening type]

### Example 3

(1) Formation of a pressure sensitive adhesive layer (a pressure sensitive adhesive layer of the energy beam hardening type)
   To an ethyl acetate solution containing an n-butyl acrylate/acrylic acid copolymer (the ratio of the contents by weight: 80/20) in an amount of 30% by weight as the concentration of the solid component, 30 equivalent of 2-methacryloxyethyl isocyanate per 100 equivalent of the acrylic acid component in the above copolymer was added. The reaction was allowed to proceed under the atmosphere of nitrogen for 48 hours, and solution (A) of a copolymer of the energy hardening type having an average fraction of methacryloyl group of the functional group of the energy hardening type introduced into the side chains of 9.2% by mole and a weight-average molecular weight of about 850,000 was obtained.
   To 100 parts by weight of the solid components in solution (A) of a copolymer of the energy hardening type, 3.0 parts by weight of oligo(2-hydroxy-2-methyl-1-[4-(1-propenyl)phenyl]propane) [manufactured by LAMBERTI SPA Company; the trade name: "ESCURE KIP150"] as the photopolymerization initiator and 1.0 part by weight of an isocyanate-based crosslinking agent [manufactured by TOYO INK SEIZO Co., Ltd.; the trade name: ORIBAIN BPS-8515"] as the crosslinking agent were added, and a coating fluid of a pressure sensitive adhesive of the energy beam hardening type was prepared.
   Then, the coating fluid prepared above was applied to release film II obtained by forming a silicone release layer on one face of a polyethylene terephthalate film having a thickness of 38 µm on the face having the release layer by a knife coater. The formed coating layer was dried by heating at 90°C for 1 minute, and a pressure sensitive adhesive layer (a pressure sensitive adhesive layer of the energy hardening type) was formed. The thickness of the obtained pressure sensitive adhesive film was about 8.0 µm as the average of the measurements at 20 points.
(2) Preparation of a pressure sensitive adhesive sheet for photorecording media
   The dried pressure sensitive adhesive layer formed in (1) described above and the photorecording layer formed in a same manner as described in (1) of Example 2 described above were combined in a manner such that the face of the photorecording layer is brought into contact with the face of the pressure sensitive adhesive layer, and the formed combination is pressed together by two rubber rolls. Ten pressure sensitive adhesive sheets for photorecording media having the construction shown in Figure 2 in which the photorecording layer and the pressure sensitive adhesive layer were laminated were prepared in this manner.
(3) Preparation of a multilayer structured article
   Release film II was removed from the pressure sensitive adhesive in the pressure sensitive adhesive sheet prepared in (2) described above. The exposed pressure sensitive adhesive layer in the pressure sensitive adhesive sheet and one face of a polycarbonate film [manufactured by TEIJIN KASEI Co., Ltd.; the trade name: PURE ACE C110-100"] having a thickness of 100 µm were laminated and pressed together by two rubber rolls. Release film I on the photorecording layer in the obtained laminate was removed. Ten pressure sensitive adhesive sheets were successively laminated in accordance with the above procedures, and a laminate in which 10 photorecording layers and 10 pressure sensitive adhesive layers were alternately laminated was prepared.
   The prepared laminate was irradiated with light in an amount of 1,000 mJ/cm² once at each side of the laminate using a high voltage mercury lamp. Thus, the pressure sensitive adhesive layers were hardened to form non-recording layers, and a multilayer structured article shown in Figure 3 was prepared.
   The properties of the prepared multilayer structured article are shown in Table 1.

### Example 4

A laminate in which 10 photorecording layers and 10 pressure sensitive adhesive layers were alternately laminated was prepared in accordance with the same procedures as those conducted in (3) of Example 3 except that a pressure sensitive adhesive layer was formed as described in (1) of Example 3 using a coating fluid of a pressure sensitive adhesive of the heat hardening type prepared as described in the following.

### <Preparation of a coating fluid of a pressure sensitive adhesive of the heat hardening type>

To solution (A) of a copolymer of the energy hardening type obtained in (1) of Example 3, 3.0 parts by weight of t-butylperoxy 2-ethylhexanoate [manufactured by NIPPON YUSHI Co., Ltd.; the trade name: "PERBUTYL O"] as the thermal polymerization initiator and 1.0 part by weight of "ORIBAIN BPS-8515" (described above) as the crosslinking agent per 100 parts by weight of the solid components in solution (A) were added, and a coating fluid of a pressure sensitive adhesive of the heat hardening type was prepared.

Then, the above laminate was kept in a chamber kept at a constant temperature of 100°C for 30 minutes to form non-recording layers by hardening the pressure sensitive adhesive layers, and a multilayer structured article shown in Figure 3 was prepared.

The properties of the prepared multilayer structured article are shown in Table 1.

### Example 5

A laminate in which 10 photorecording layers and 10 pressure sensitive adhesive layers were alternately laminated was prepared in accordance with the same procedures as those conducted in (3) of Example 3 except that a coating fluid of a pressure sensitive adhesive of the energy beam hardening type prepared as described in the following was used in the formation of a pressure sensitive adhesive layer described in (1) of

### Example 3.

### <Preparation of a coating fluid of a pressure sensitive adhesive of the energy beam hardening type>

To solution (A) of a copolymer of the energy hardening type obtained in (1) of Example 3, 50 parts by weight of dipentaerythritol hexaacrylate [manufactured by NIPPON KAYAKU Co., Ltd.; the trade name: "DPHA"] as the energy hardening monomer and 1.0 part by weight of "ESCURE KIP-150" (described above) as the photopolymerization initiator per 100 parts by weight of the solid components in solution (A) were added, and a coating fluid of a pressure sensitive adhesive of the energy beam hardening type was prepared.

The above laminate was irradiated with light in a manner similar to that described in (3) of Example 3 to form non-recording layers by hardening the pressure sensitive adhesive layers, and a multilayer structured article shown in Figure 3 was prepared.

The properties of the multilayer structured article are shown in Table 1.

**Table 1**

| | Dynamic hardness test | | Storage modulus | | Suppressing formation of press marks |
|---|---|---|---|---|---|
| | depth of depression (µm) | dynamic hardness | before hardening (Pa) | after hardening (Pa) | |
| Example 2 | 9.8 | 0.210 | 1.8×10⁵ | ― | poor |
| Example 3 | 7.5 | 0.345 | 2.2×10⁵ | 2.3×10⁸ | good |
| Example 4 | 7.5 | 0.345 | 2.2×10⁵ | 2.3×10⁸ | good |
| Example 5 | 6.1 | 0.525 | 1.5x104 | 1.8×10⁹ | good |

## Claims

1. A pressure sensitive adhesive sheet comprising a laminate of a photorecording layer which comprises a photosensitive material and a pressure sensitive adhesive layer.

2. A pressure sensitive adhesive sheet according to Claim 1, which comprises a release film at each outer face of the photorecording layer and the pressure sensitive adhesive layer.

3. A pressure sensitive adhesive sheet according to any one of Claims 1 and 2, wherein the pressure sensitive adhesive layer comprises an acrylic pressure sensitive adhesive.

4. A multilayer structured article for photorecording media which is formed by using a pressure sensitive adhesive sheet described in any one of Claims 1, 2 and 3, wherein the photorecording layer and the pressure sensitive adhesive layer are laminated alternately.

5. A pressure sensitive adhesive sheet for photorecording media according to Claim 1, wherein the pressure sensitive adhesive layer comprises a pressure sensitive adhesive layer of an energy hardening type.

6. A pressure sensitive adhesive sheet for photorecording media according to Claim 5, which comprises a release film at each outer face of the photorecording layer and the pressure sensitive adhesive layer.

7. A pressure sensitive adhesive sheet for photorecording media according to any one of Claims 5 and 6, wherein the pressure sensitive adhesive layer of an energy hardening type is a pressure sensitive adhesive layer of a heat hardening type or an energy beam hardening type.

8. A multilayer structured article for photorecording media which is formed with a pressure sensitive adhesive sheet described in any one of Claims 5, 6 and 7, wherein the photorecording layer and the pressure sensitive adhesive layer hardened by application of an energy are laminated alternately.

9. A multilayer photorecording medium which comprises a multilayer structured article described in any one of Claims 4 and 8.
